# EUROPEAN PATENT APPLICATION

(11) **EP 4 790 271 A1**
(43) Date of publication of application: **12.08.2026**
(21) Application number: 25182563.4
(22) Date of filing: 13.06.2025
(51) Int. Cl.: F16D 43/21

(54) **CLUTCH DEVICE WITH REVERSE INPUT BLOCKING FUNCTION**

(30) Priority: 05.02.2025 KR 20250014747
(71) Applicant: Hyundai Mobis Co., Ltd., Gangnam-gu Seoul 06141 (KR)
(72) Inventor: KIM, Je Won, 16891 Yongin-si, Gyeonggi-do (KR)
(74) Representative: Jung, Minkyu

(57) **Abstract**

A clutch device with a reverse input blocking function includes a drive shaft rotating by power from a drive unit, an output shaft transmitting a power transmitted from the drive shaft to an object to be driven, and a variable transmission unit engaged to the drive shaft and the output shaft, transmitting power from the drive shaft to the output shaft and blocking reverse-direction power input from the output shaft.

## Description

### BACKGROUND

### FIELD

The present disclosure relates to a clutch device with a reverse input blocking function configured to block reverse-direction power, which is input due to an external force applied to an object to be driven under certain operating conditions, from being transmitted to the drive unit.

### DISCUSSION OF THE BACKGROUND

Recent steering systems of vehicles are equipped with hydraulic devices, motors, and reducers, allowing the steering of the vehicle's drive wheels based on the driving conditions of the vehicle.

As described above, the steering systems that control the steering of the vehicle using a motor without mechanical connection are applied to systems such as four-wheel independent steering systems and steer-by-wire (SBW) systems.

Such motor-controlled steering systems may also be applied to rear-wheel steering (RWS) systems of the vehicle.

In general, the rear-wheel steering system operates to reduce the turning radius when the vehicle is at low speed and enhance driving stability when the vehicle is at high speed.

A common example of a motor-driven conventional rear-wheel steering system, considering vehicle mountability, uses a lead screw directly connected to a hollow shaft motor as a reducer.

Such a reducer structure includes a nut directly connected to a rotor shaft of the hollow shaft motor and a lead screw bar that converts the rotation of the nut into linear motion.

Due to the low efficiency of the lead screw bar, which primarily relies on surface contact, the output of the hollow shaft motor applied to the conventional structure increases, resulting in a larger motor size and higher cost.

Additionally, the reverse input transmitted through the lead screw bar is directly delivered to the motor through the nut, which degrades motor performance and causes issues with noise and vibration.

The related art of the present disclosure is disclosed in Korean Patent Application Publication No. 10-2018-0130240 (published on December 7, 2018 and entitled "REAR WHEEL STEERING").

### SUMMARY

Various aspects of the present disclosure are directed to providing a clutch device with a reverse input blocking function, which blocks power transmission when reverse-direction power is input due to an external force applied to an object to be driven, thereby preventing malfunction and damage to a drive unit caused by reverse-direction power being transmitted to the drive unit due to the external force.

The clutch device with a reverse input blocking function includes a drive shaft rotating by power from a drive unit, an output shaft transmitting a power transmitted from the drive shaft to an object to be driven, and a variable transmission unit engaged to the drive shaft and the output shaft, transmitting power from the drive shaft to the output shaft and blocking reverse-direction power input from the output shaft.

The drive shaft may include a shaft body connected to the drive unit, and a drive connection unit connecting the shaft body to a rotational center of the variable transmission unit, which has a different diameter from the shaft body.

The drive connection unit may include a drive panel disposed on the shaft body, a plurality of connection protrusions disposed on the drive panel to be spaced apart from the shaft body, disposed at an equal distance from the shaft body, and coupled to the variable transmission unit, and connection hole portions formed in the variable transmission unit to allow insertion and connection of the connection protrusion.

The output shaft may include a first shaft member connected to the variable transmission unit, a second shaft member connected to the object to be driven, and a transmission block disposed between the first shaft member and the second shaft member and interlocked with the variable transmission unit.

The variable transmission unit may include a housing connected to the drive unit and including an installation space, a plurality of shoe members rotatably disposed in the housing and arranged with a variable gap, and a braking unit configured to block power by widening the variable gap between the plurality of shoe members and allowing the shoe members to frictionally contact the housing.

The shoe members may include a first shoe disposed in a side portion of the housing and having an end pivotally connected to the drive shaft and an opposite end movably connected to the drive shaft, a second shoe disposed in an opposite side portion of the housing, including an end pivotally connected to the drive shaft and an opposite end movably connected to the drive shaft, and installed symmetrically to the first shoe, and a variable connection unit movably connecting the first shoe and the second shoe and maintaining a constant gap between the first shoe and the second shoe.

The variable connection unit may include slot portions disposed in the first shoe and the second shoe to allow the drive shaft to be movably connected, and a first elastic member connecting the first shoe and the second shoe and providing a tension that pulls the first shoe and the second shoe toward each other.

The braking unit may include a braking groove portion disposed in the transmission block, a braking protrusion movably disposed along a gap between the first shoe and the second shoe, mounted on the braking groove portion, and pressed by an inclined surface of the braking groove portion to protrude outward from the braking groove portion in response to rotation of the transmission block, and a conversion transmission unit converting a linear motion of the braking protrusion into a motion that widens the gap between the first shoe and the second shoe and transmit the converted motion.

The conversion transmission unit may include a pressing protrusion configured to be pressed by the braking protrusion and move in an outward direction of the first shoe and the second shoe, a first inclined surface formed on the first shoe, which is pressed by an inclined surface of the pressing protrusion and pushes the first shoe outward, and a second inclined surface formed on the second shoe symmetrically to the first inclined surface, which is pressed by the inclined surface of the pressing protrusion and pushes the second shoe outward.

The variable transmission unit may further include a restoring unit configured to restore an operation of the braking unit to an original state in response to a release of the reverse-direction power transmitted through the output shaft.

The restoring unit may include a restoring protrusion disposed between the first shoe and the second shoe, through which a connection shaft connecting the pressing protrusion and the braking protrusion passes, and a second elastic member interposed between the restoring protrusion and the braking protrusion to provide an elastic force that separates the pressing protrusion and the braking protrusion from the first inclined surface and the second inclined surface.

The clutch device with a reverse input blocking function may include a drive shaft rotating by power from a drive unit, an output shaft transmitting a power transmitted from the drive shaft to an object to be driven, and a variable transmission unit engaged to the drive shaft and the output shaft, transmitting power from the drive shaft to the output shaft and blocking reverse-direction power input from the output shaft, wherein the clutch device is installed in any one of a four-wheel independent steering system, a steer-by-wire (SBW) system, or a rear-wheel steering system.

the output shaft may include a first shaft member coupled to the variable transmission unit; a second shaft member connected to the object to be driven; and a transmission block disposed between the first shaft member and the second shaft member and interlocked with the variable transmission unit.

The variable transmission unit may include: a housing connected to the drive unit and including an installation space; a plurality of shoe members rotatably disposed in the housing and arranged with a variable gap therebetween; and a braking unit configured to block power by widening the variable gap between the plurality of shoe members and allowing the shoe members to frictionally contact the housing.

The shoe members may include: a first shoe disposed in a side portion of the housing and having an end pivotally connected to the drive shaft and an opposite end movably connected to the drive shaft; a second shoe disposed in an opposite side portion of the housing, including an end pivotally connected to the drive shaft and an opposite end movably connected to the drive shaft, and installed symmetrically to the first shoe; and a variable connection unit movably connecting the first shoe and the second shoe and maintaining a constant gap between the first shoe and the second shoe.

The variable connection unit comprises: slot portions disposed in the opposite ends of the first shoe and the second shoe and movably connected to the drive shaft; and a first elastic member connecting the first shoe and the second shoe and providing a tension that pulls the first shoe and the second shoe toward each other.

The braking unit comprises: a braking groove portion disposed in the transmission block; a braking protrusion movably disposed along a gap between the first shoe and the second shoe, mounted on the braking groove portion, and pressed by an inclined surface of the braking groove portion to protrude outward from the braking groove portion in response to rotation of the transmission block; and a conversion transmission unit converting a linear motion of the braking protrusion into a motion that widens the gap between the first shoe and the second shoe and transmit the converted motion.

The conversion transmission unit may include: a pressing protrusion configured to be pressed by the braking protrusion and move in an outward direction of the first shoe and the second shoe; a first inclined surface formed on the first shoe, which is pressed by an inclined surface of the pressing protrusion and pushes the first shoe outward; and a second inclined surface formed on the second shoe symmetrically to the first inclined surface, which is pressed by the inclined surface of the pressing protrusion and pushes the second shoe outward.

The variable transmission unit may further include a restoring unit configured to restore an operation of the braking unit to an original state in response to a release of the reverse-direction power transmitted through the output shaft.

The restoring unit comprises: a restoring protrusion disposed between the first shoe and the second shoe, through which a connection shaft connecting the pressing protrusion and the braking protrusion passes; and a second elastic member interposed between the restoring protrusion and the braking protrusion to provide an elastic force that separates the pressing protrusion and the braking protrusion from the first inclined surface and the second inclined surface.

The clutch device with a reverse input blocking function according to the present disclosure includes the variable transmission unit configured to transmit forward-direction power between the drive shaft connected to the drive unit and the output shaft connected to the object to be driven, and block reverse-direction power. Thus, when reverse-direction power is input through the output shaft due to an external force applied to the object to be driven under certain operating conditions in which the object to be driven operates, the reverse-direction power may be blocked by the operation of the variable transmission unit, thereby preventing the transmission of reverse-direction power to the drive unit.

The clutch device with a reverse input blocking function according to the present disclosure includes the variable connection unit that connects the gap between a pair of shoe members in a variable manner, and the output shaft is configured to be interlocked with the variable connection unit. Accordingly, when reverse-direction power is input along the output shaft, the reverse-direction power of the output shaft operates the variable connection unit, which increases the gap between the pair of shoe members to block the reverse-direction power.

The clutch device with a reverse input blocking function according to the present disclosure is capable of blocking reverse input through a mechanical connection structure, which includes shoe members and the variable connection unit, without a separate electronic device. This contributes to reducing the time and cost required to manufacture the clutch device with a reverse input blocking function.

The clutch device with a reverse input blocking function according to the present disclosure includes the braking unit that blocks reverse input by widening a gap between a pair of shoe members when the reverse input is transmitted along the output shaft, and the restoring unit that restores the operation of the braking unit to the original state when the reverse input is released. This contributes to preventing malfunction in which forward-direction power is not transmitted even after the reverse input is released.

The clutch device with a reverse input blocking function according to the present disclosure may be applied to a rear-wheel steering system employing a lead screw mechanism, which overcomes the steering limit range of ±5 to ±10 degrees by using a ball screw, thereby providing the steering system with a reverse input blocking function.

The clutch device with a reverse input blocking function according to the present disclosure may be applied to all types of steering systems in which steering is performed by motor driving, such as four-wheel independent steering systems, steer-by-wire (SBW) systems, and rear-wheel steering systems.

### BRIEF DESCRIPTION OF THE DRAWINGS

FIG. 1 is a view illustrating a rear-wheel steering system equipped with a clutch device with a reverse input blocking function according to an embodiment of the present disclosure.
FIG. 2 is a perspective view illustrating the clutch device with a reverse input blocking function according to an embodiment of the present disclosure.
FIG. 3 is an exploded perspective view illustrating a housing and a variable transmission unit of the clutch device with a reverse input blocking function according to an embodiment of the present disclosure.
FIG. 4 is an exploded perspective view illustrating a drive shaft, an output shaft, and a variable transmission unit of the clutch device with a reverse input blocking function according to an embodiment of the present disclosure.
FIG. 5 is a cross-sectional view illustrating the clutch device with a reverse input blocking function according to an embodiment of the present disclosure.
FIG. 6 is an operational view illustrating the clutch device with a reverse input blocking function according to an embodiment of the present disclosure.
FIG. 7 is a cross-sectional view illustrating a braking unit and a restoring unit of the clutch device with a reverse input blocking function according to an embodiment of the present disclosure.

### DETAILED DESCRIPTION OF THE ILLUSTRATED EMBODIMENTS

Embodiments of a clutch device with a reverse input blocking function according to the present disclosure will be described below with reference to the accompanying drawings.

In this process, the thickness of lines and the size of elements illustrated in the drawing may be exaggerated for clarity and convenience of description.

In addition, the terms used below are defined in consideration of the functions thereof in the present disclosure and may vary depending on the intention of a user or an operator or common practice.

Therefore, the definitions of such terms should be made based on the content set forth throughout the present specification.

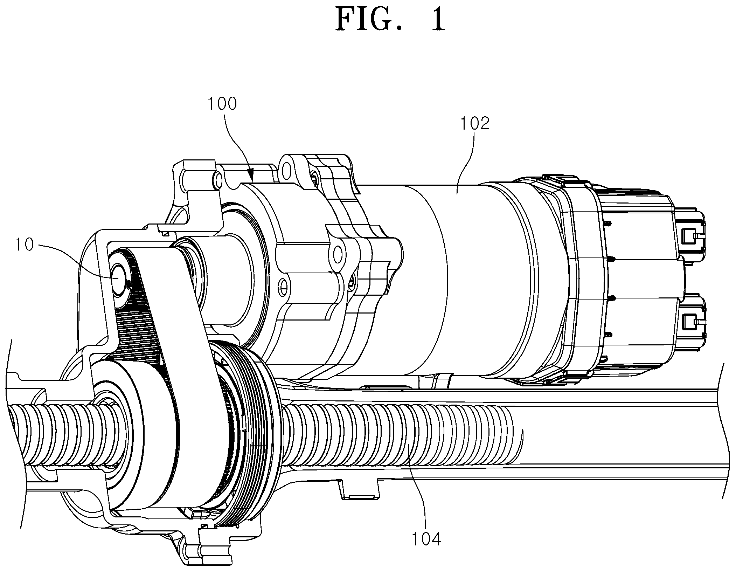

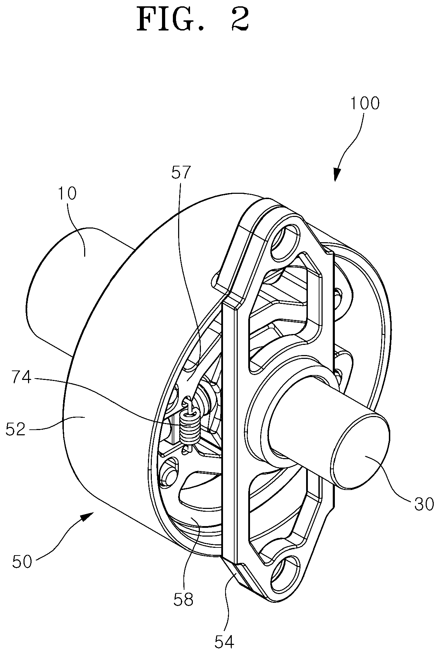

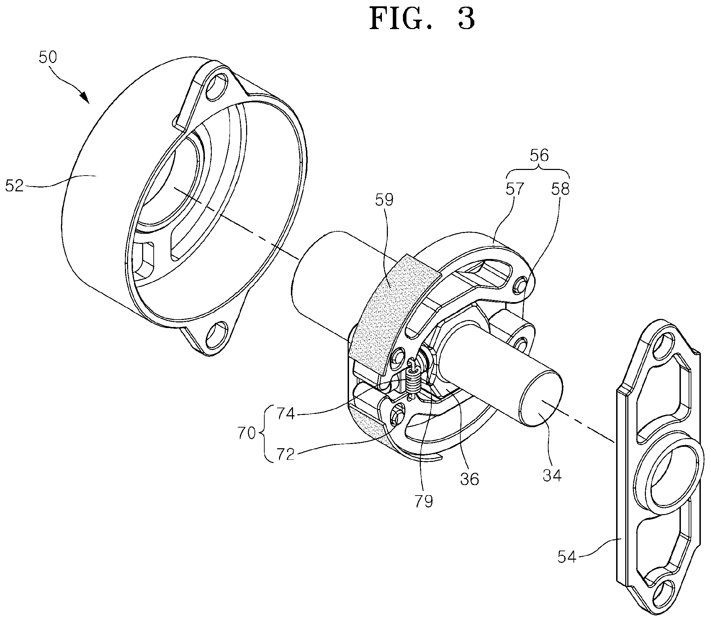

FIG. 1 is a view illustrating a rear-wheel steering system equipped with a clutch device with a reverse input blocking function according to an embodiment of the present disclosure. FIG. 2 is a perspective view illustrating the clutch device with a reverse input blocking function according to an embodiment of the present disclosure. FIG. 3 is an exploded perspective view illustrating a housing and a variable transmission unit of the clutch device with a reverse input blocking function according to an embodiment of the present disclosure.

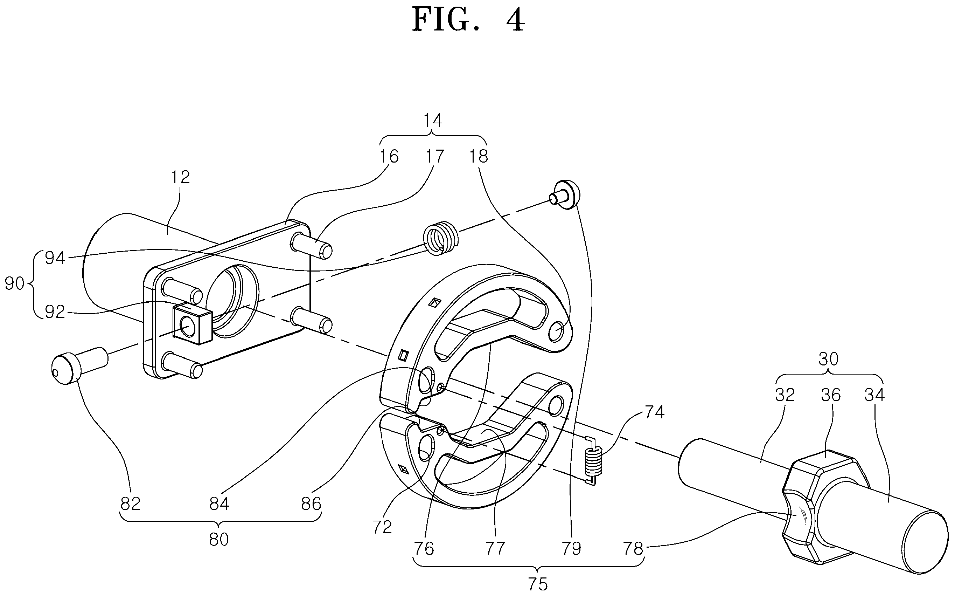

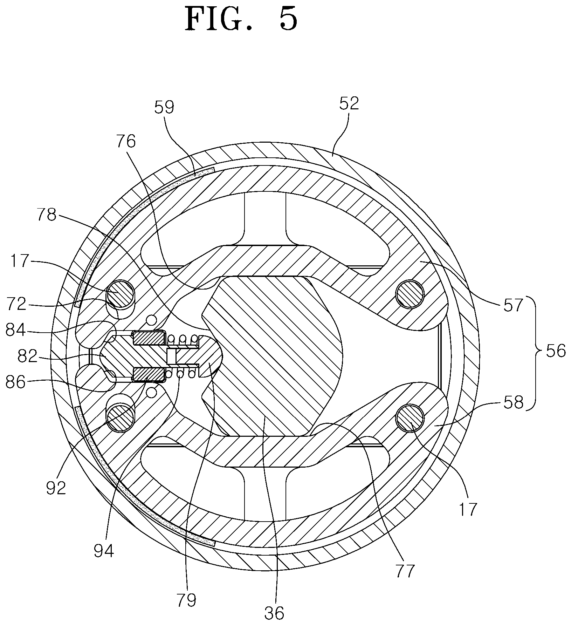

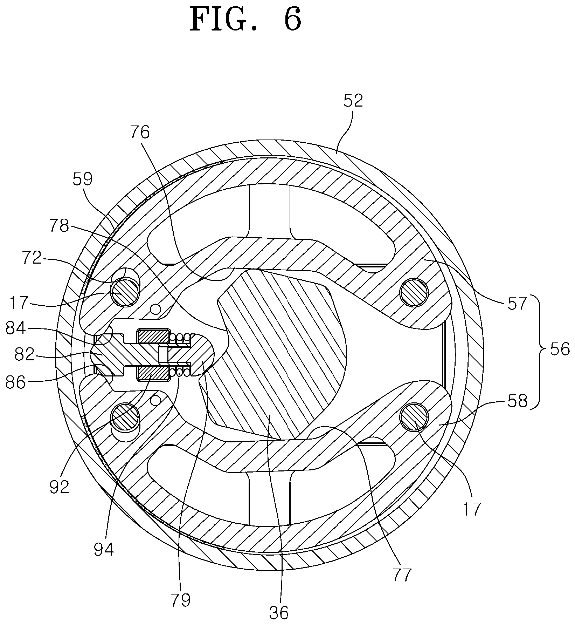

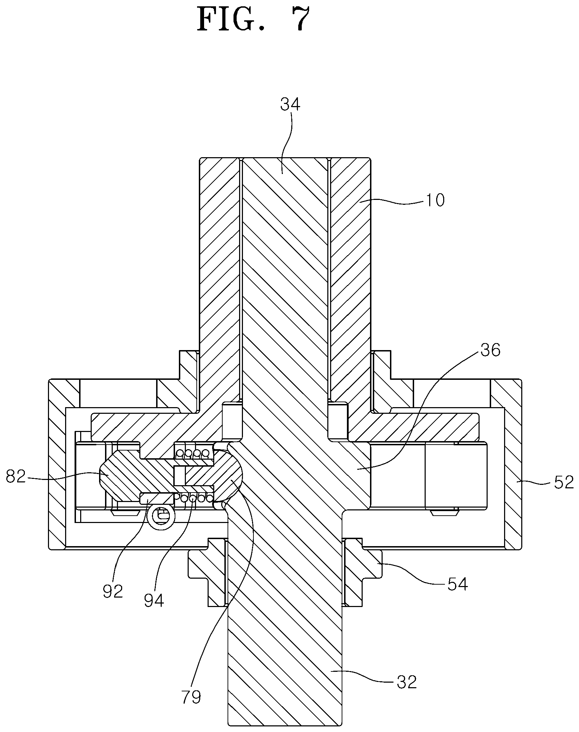

FIG. 4 is an exploded perspective view illustrating a drive shaft, an output shaft, and a variable transmission unit of the clutch device with a reverse input blocking function according to an embodiment of the present disclosure. FIG. 5 is a cross-sectional view illustrating the clutch device with a reverse input blocking function according to an embodiment of the present disclosure. FIG. 6 is an operational view illustrating the clutch device with a reverse input blocking function according to an embodiment of the present disclosure. FIG. 7 is a cross-sectional view illustrating a braking unit and a restoring unit of the clutch device with a reverse input blocking function according to an embodiment of the present disclosure.

Referring to FIGS. 1 to 7, a clutch device with a reverse input blocking function according to an embodiment of the present disclosure includes a drive shaft 10 rotated by power from a drive unit 102, an output shaft 30 that delivers the power transmitted from the drive shaft 10 to an object to be driven, and a variable transmission unit 50 that transmits the power from the drive shaft 10 to the output shaft 30 and blocks power input in the reverse direction from the output shaft 30.

Accordingly, when a clutch device 100 according to the present embodiment is installed in a rear-wheel steering system, power generated by the operation of a steering wheel is transmitted from the drive unit 102 to a screw 104 via the clutch device 100, thereby enabling rear wheels to be steered. When reverse-direction power is generated due to an external force applied to the rear wheels during driving, which causes the rear wheels to steer, such reverse-direction power is blocked by the operation of the variable transmission unit 50, thereby preventing malfunction and damage to the drive unit 102 caused by reverse-direction power being transmitted to the drive unit 102.

The drive shaft 10 of the present disclosure includes a shaft body 12 connected to the drive unit 102, and a drive connection unit 14 that connects the shaft body 12 to the rotational center of the variable transmission unit 50, which has a different diameter than the shaft body 12. Accordingly, when power of the drive shaft 10 is transmitted to the variable transmission unit 50, the rotational centers of the output shaft 30 and the variable transmission unit 50 are connected to be aligned on a common line, allowing for eccentricity-free power transmission from the drive unit 102.

The drive connection unit 14 includes a drive panel 16 installed on the shaft body 12, a plurality of connection protrusions 17 installed on the drive panel 16 to be spaced apart from the shaft body 12 and disposed at an equal distance from the shaft body 12 to be coupled to the variable transmission unit 50, and connection hole portions 18 provided in the variable transmission unit 50 to allow insertion and connection of the connection protrusions 17.

The drive panel 16, which is formed to extend widely in the lateral direction, is integrally connected to an end portion of the shaft body 12. The plurality of connection protrusions 17 are formed along the edge of the drive panel 16. The plurality of connection protrusions 17 are disposed at an equal distance from the rotational center of the shaft body 12. Accordingly, the rotational centers of the shaft body 12 and the variable transmission unit 50 may be aligned on a common line even when the rotational center of the variable transmission unit 50, which is connected to the shaft body 12 via the plurality of connection protrusions 17, is spaced apart from the connection protrusions 17.

The output shaft 30 of the present embodiment includes a first shaft member 32 connected to the variable transmission unit 50, a second shaft member 34 connected to an object to be driven, and a transmission block 36 interposed between the first shaft member 32 and the second shaft member 34 and interlocked with the variable transmission unit 50.

In this configuration, the transmission block 36 is formed as a polyhedral block inserted into the variable transmission unit 50. The transmission block 36, which has a plurality of edges, is inserted into the gap between shoe members 56 provided in the variable transmission unit 50. Accordingly, when the power of the drive shaft 10 rotates the complete variable transmission unit 50, the transmission block 36, interposed between the shoe members 56 provided in the variable transmission unit 50, rotates interlocked with the shoe members 56 and transmits power to the output shaft 30.

The variable transmission unit 50 of the present embodiment includes a housing 52 that is connected to the drive unit 102 and provides an installation space, a plurality of shoe members 56 that are rotatably disposed in the housing 52 with a variable gap between the shoe members, and a braking unit 75 configured to block power by widening the gap between the plurality of the shoe members 56 and allowing the shoe members 56 to frictionally contact the housing 52.

The shoe members 56 include a first shoe 57 provided in a side portion of the housing 52 and configured to have an end pivotally connected to the drive shaft 10 and the opposite end movably connected to the drive shaft 10, a second shoe 58 provided in the opposite side portion of the housing 52, configured to have an end pivotally connected to the drive shaft 10 and the opposite end movably connected to the drive shaft 10, and installed symmetrically to the first shoe 57, and a variable connection unit 70 that movably connects the first shoe 57 and the second shoe 58 and maintains a constant gap between the first shoe 57 and the second shoe 58.

The first shoe 57 and the second shoe 58 each have a semicircular front shape. When arranged adjacent to each other, a nearly circular disk shape is formed, enabling accommodation inside the disk-shaped housing 52. The connection hole portions 18 are formed at an end portion of the first shoe 57 and an end portion of the second shoe 58 to allow insertion of the connection protrusions 17. Accordingly, the first shoe 57 and the second shoe 58 are rotatably installed within the housing 52 to allow a predetermined amount of rotation about the connection protrusion 17.

Due to slot portions 72 formed at the opposite end portions of the first shoe 57 and the second shoe 58, the opposite end portions of the first shoe 57 and the second shoe 58 may move outward by the length of the slot portions 72 even when the connection protrusions 17 are inserted.

The variable connection unit 70 of the present embodiment includes slot portions 72 formed in the first shoe 57 and the second shoe 58 to allow the drive shaft 10 to be movably connected, and a first elastic member 74 installed between the first shoe 57 and the second shoe 58 to provide a tension that pulls the first shoe 57 and the second shoe 58 toward each other.

Accordingly, the first shoe 57 and the second shoe 58 are arranged to maintain a constant distance from each other by an elastic force provided by the first elastic member 74, such that the outer walls of the first shoe 57 and the second shoe 58 remain separated from the inner wall of the housing 52.

As described above, when power is transmitted to the first shoe 57 and the second shoe 58 in a state where the first shoe 57 and the second shoe 58 remain separated from the housing 52, the drive shaft 10, the first shoe 57, the second shoe 58, and the output shaft 30 rotate together, thereby enabling power transmission. When reverse-direction power is input through the output shaft 30, the braking unit 75 operates to widen the gap between the first shoe 57 and the second shoe 58, causing the outer walls of the first shoe 57 and the second shoe 58 to come into frictional contact with the inner wall of the housing 52, thereby blocking the power input through the output shaft 30.

The braking unit 75 of the present embodiment includes a braking groove portion 78 provided in the transmission block 36, a braking protrusion 79 that is movably installed along the gap between the first shoe 57 and the second shoe 58, mounted on the braking groove portion 78, and pressed by an inclined surface of the braking groove portion 78 to protrude outward from the braking groove portion 78 in response to rotation of the transmission block 36, and a conversion transmission unit 80 that converts a linear motion of the braking protrusion 79 into a motion that widens the gap between the first shoe 57 and the second shoe 58 and transmits the converted motion.

A first operation groove portion 76 is concavely formed outward at a central portion of the first shoe 57, and a second operation groove portion 77 is concavely formed outward at a central portion of the second shoe 58. Accordingly, a space in which the first operation groove portion 76 and the second operation groove portion 77 face each other is formed as a space into which the transmission block 36 is inserted. The first operation groove portion 76 and second operation groove portion 77 are arranged to closely contact the outer walls of the transmission block 36, which includes a plurality of edges. Accordingly, the transmission block 36 is pressed by the first operation groove portion 76 and the second operation groove portion 77 when the shoe members 56 rotate, thereby transmitting power to the output shaft 30.

Under the condition that forward-direction power is being transmitted as described above or the power transmission is not taking place, when an external force is transmitted to driving wheels of the vehicle and the driving wheels are steered, reverse-direction power may be input along the output shaft 30. At this point, when the output shaft 30 of the present embodiment rotates, the transmission block 36 rotates, causing the gap between the first shoe 57 and the second shoe 58 to widen.

When the gap between the first shoe 57 and the second shoe 58 widens, the outer walls of the first shoe 57 and the second shoe 58 come into frictional contact with the inner wall of the housing 52, blocking the power input through the output shaft 30 and preventing the reverse-direction power from being transmitted to the drive unit 102.

The conversion transmission unit 80 of the present embodiment includes a pressing protrusion 82 that is pressed by the braking protrusion 79 and moves in the outward direction of the first shoe 57 and the second shoe 58, a first inclined surface 84 formed on the first shoe 57, which is pressed by an inclined surface of the pressing protrusion 82 and pushes the first shoe 57 outward, and a second inclined surface 86 formed on the second shoe 58 symmetrically to the first inclined surface 84, which is pressed by the inclined surface of the pressing protrusion 82 and pushes the second shoe 58 outward.

Accordingly, when the transmission block 36 is rotated by power input in the reverse direction along the output shaft 30, the transmission block 36 rotates, and the braking protrusion 79 accommodated in the braking groove portion 78 is pressed by the inclined surface and protrudes outward from the braking groove portion 78. As the braking protrusion 79 presses the pressing protrusion 82 against the first inclined surface 84 and the second inclined surface 86, the first inclined surface 84 and the second inclined surface 86 push outward, thereby widening the gap between the first shoe 57 and the second shoe 58.

In addition, the variable transmission unit 50 of the present disclosure further includes a restoring unit 90 that restores the operation of the braking unit 75 to the original state in response to the release of the reverse-direction power transmitted through the output shaft 30. The restoring unit 90 includes a restoring protrusion 92 installed between the first shoe 57 and the second shoe 58, through which a connection shaft connecting the pressing protrusion 82 and the braking protrusion 79 passes, and a second elastic member 94 interposed between the restoring protrusion 92 and the braking protrusion 79 to provide an elastic force that separates the pressing protrusion 82 and the braking protrusion 79 from the first inclined surface 84 and the second inclined surface 86.

As the pressing protrusion 82, which is pressed by the braking protrusion 79, presses the first inclined surface 84 and the second inclined surface 86 outward, the gap between the first shoe 57 and the second shoe 58 increases. Accordingly, friction sheets 59 installed on the outer walls of the first shoe 57 and the second shoe 58 come into frictional contact with the inner wall of the housing 52, thereby restricting the reverse rotational motion of the drive shaft 10.

When the reverse-direction power described above is released, the second elastic member 94, which is pressed by the braking protrusion 79, returns to the original state, thereby increasing the gap between the braking protrusion 79 and the restoring protrusion 92. Accordingly, the braking protrusion 79 and the pressing protrusion 82 are retracted to their original positions, thereby restoring the gap between the first shoe 57 and the second shoe 58 to the original state.

Accordingly, the clutch device with a reverse input blocking function may be provided, which blocks power transmission when reverse-direction power is input due to an external force applied to an object to be driven, thereby preventing malfunction and damage to the drive unit caused by reverse-direction power being transmitted to the drive unit due to the external force.

Although the present disclosure has been described with reference to an embodiment shown in the drawings, the embodiment is merely illustrative, and those skilled in the art will appreciate that various modifications and other equivalent embodiment can be made from the embodiment disclosed herein.

Although the clutch device with a reverse input blocking function has been described as an example, this is merely illustrative, and the clutch device of the present disclosure can be applied to other products that do not have the reverse input blocking function.

Therefore, the true technical scope of the present disclosure should be defined by the claims below.

## Claims

1. A clutch device with a reverse input blocking function, the clutch device comprising:
a drive shaft rotating by power from a drive unit;
an output shaft transmitting a power transmitted from the drive shaft to an object to be driven; and
a variable transmission unit engaged to the drive shaft and the output shaft, transmitting the power from the drive shaft to the output shaft and blocking reverse-direction power input from the output shaft.

2. The clutch device of claim 1, wherein the drive shaft comprises:
a shaft body connected to the drive unit; and
a drive connection unit connecting the shaft body to a rotational center of the variable transmission unit, which has a different diameter from the shaft body.

3. The clutch device of claim 2,
wherein the drive connection unit comprises:
a drive panel disposed on the shaft body; and
a plurality of connection protrusions disposed on the drive panel to be spaced apart from the shaft body, disposed at an equal distance from the shaft body, and coupled to the variable transmission unit, and
wherein the variable transmission unit includes connection hole portions into which the connection protrusions are coupled.

4. The clutch device of any one of claims 1 to 3, wherein the output shaft comprises:
a first shaft member coupled to the variable transmission unit;
a second shaft member connected to the object to be driven; and
a transmission block disposed between the first shaft member and the second shaft member and interlocked with the variable transmission unit.

5. The clutch device of any one of claims 1 to 4, wherein the variable transmission unit comprises:
a housing connected to the drive unit and including an installation space;
a plurality of shoe members rotatably disposed in the housing and arranged with a variable gap therebetween; and
a braking unit configured to block power by widening the variable gap between the plurality of shoe members and allowing the shoe members to frictionally contact the housing.

6. The clutch device of claim 5, wherein the shoe members comprise:
a first shoe disposed in a side portion of the housing and having an end pivotally connected to the drive shaft and an opposite end movably connected to the drive shaft;
a second shoe disposed in an opposite side portion of the housing, including an end pivotally connected to the drive shaft and an opposite end movably connected to the drive shaft, and installed symmetrically to the first shoe; and
a variable connection unit movably connecting the first shoe and the second shoe and maintaining a constant gap between the first shoe and the second shoe.

7. The clutch device of claim 6, wherein the variable connection unit comprises:
slot portions disposed in the opposite ends of the first shoe and the second shoe and movably connected to the drive shaft; and
a first elastic member connecting the first shoe and the second shoe and providing a tension that pulls the first shoe and the second shoe toward each other.

8. The clutch device of claim 6 or 7, wherein the braking unit comprises:
a braking groove portion disposed in the transmission block;
a braking protrusion movably disposed along a gap between the first shoe and the second shoe, mounted on the braking groove portion, and pressed by an inclined surface of the braking groove portion to protrude outward from the braking groove portion in response to rotation of the transmission block; and
a conversion transmission unit converting a linear motion of the braking protrusion into a motion that widens the gap between the first shoe and the second shoe and transmit the converted motion.

9. The clutch device of claim 8, wherein the conversion transmission unit comprises:
a pressing protrusion configured to be pressed by the braking protrusion and move in an outward direction of the first shoe and the second shoe;
a first inclined surface formed on the first shoe, which is pressed by an inclined surface of the pressing protrusion and pushes the first shoe outward; and
a second inclined surface formed on the second shoe symmetrically to the first inclined surface, which is pressed by the inclined surface of the pressing protrusion and pushes the second shoe outward.

10. The clutch device of any one of claims 6 to 9, wherein the variable transmission unit further comprises a restoring unit configured to restore an operation of the braking unit to an original state in response to a release of the reverse-direction power transmitted through the output shaft.

11. The clutch device of claim 10, wherein the restoring unit comprises:
a restoring protrusion disposed between the first shoe and the second shoe, through which a connection shaft connecting the pressing protrusion and the braking protrusion passes; and
a second elastic member interposed between the restoring protrusion and the braking protrusion to provide an elastic force that separates the pressing protrusion and the braking protrusion from the first inclined surface and the second inclined surface.

12. A clutch device with a reverse input blocking function, the clutch device comprising:
a drive shaft rotating by power from a drive unit;
an output shaft transmitting a power transmitted from the drive shaft to an object to be driven; and
a variable transmission unit engaged to the drive shaft and the output shaft, transmitting power from the drive shaft to the output shaft and blocking reverse-direction power input from the output shaft,
wherein the clutch device is installed in any one of a four-wheel independent steering system, a steer-by-wire (SBW) system, or a rear-wheel steering system.

13. The clutch device of claim 12, wherein the output shaft comprises:
a first shaft member coupled to the variable transmission unit;
a second shaft member connected to the object to be driven; and
a transmission block disposed between the first shaft member and the second shaft member and interlocked with the variable transmission unit.

14. The clutch device of claim 12 or 13, wherein the variable transmission unit comprises:
a housing connected to the drive unit and including an installation space;
a plurality of shoe members rotatably disposed in the housing and arranged with a variable gap therebetween; and
a braking unit configured to block power by widening the variable gap between the plurality of shoe members and allowing the shoe members to frictionally contact the housing.

15. The clutch device of claim 14, wherein the shoe members comprise:
a first shoe disposed in a side portion of the housing and having an end pivotally connected to the drive shaft and an opposite end movably connected to the drive shaft;
a second shoe disposed in an opposite side portion of the housing, including an end pivotally connected to the drive shaft and an opposite end movably connected to the drive shaft, and installed symmetrically to the first shoe; and
a variable connection unit movably connecting the first shoe and the second shoe and maintaining a constant gap between the first shoe and the second shoe.
